(19) Europäisches Patentamt
European Patent Office
Office européen des brevets

(11) **EP 4 633 249 A1**

(12) **EUROPEAN PATENT APPLICATION**

(43) Date of publication:
**15.10.2025 Bulletin 2025/42**

(21) Application number: **25169222.4**

(22) Date of filing: **08.04.2025**

(51) International Patent Classification (IPC):
*H04W 52/02* (2009.01)   *H04L 1/00* (2006.01)
*H04L 5/00* (2006.01)   *H04L 27/00* (2006.01)

(52) Cooperative Patent Classification (CPC):
**H04W 52/0235; H04L 27/0008; H04L 27/02;**
**H04L 27/2602;** H04L 1/0061; H04W 52/0219

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **09.04.2024 KR 20240048295**
**25.03.2025 KR 20250037734**

(71) Applicant: **KT Corporation**
**Seongnam-si, Gyeonggi-do 13606 (KR)**

(72) Inventor: **PARK, Ki-hyeon**
**13606 Seongnam-si, Gyeonggi-do (KR)**

(74) Representative: **BCKIP Part mbB**
**MK1**
**Landsbergerstraße 98, 3.Stock**
**80339 München (DE)**

(54) **METHOD AND APPARATUS FOR TRANSCEIVING LOW-POWER SIGNAL**

(57) Provided are a method and apparatus for transceiving a low-power signal in a wireless communication system. A terminal receives a payload of a low-power wake-up signal (LP-WUS) from a base station and monitors a physical downlink control channel (PDCCH) based on the received payload of the LP-WUS. The payload of the LP-WUS includes at least one of user identity information, cell identity information, cyclic redundancy check (CRC) information, role information of the LP -WUS, and operation state information of the LP-WUS.

# FIG. 8

EP 4 633 249 A1

**Description**

CROSS-REFERENCE TO RELATED THE APPLICATION

This application is based on and claims priority on Patent Application No. 10-2024-0048295 filed on Apr. 9, 2024 and No. 10-2025-0037734 filed on Mar. 25, 2025 in the Korean Intellectual Property Office.

BACKGROUND

Technical Field

The present disclosure relates to wireless communication applicable to 5G NR, 5G-Advanced and 6G.

Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios that are classified into Enhanced Mobile BroadBand (eMBB), Ultra-reliable and low-latency communication (URLLC), Massive Machine-Type Communications (mMTC), and the like.

eMBB, URLLC, and mMTC represent next generation mobile communication scenarios. eMBB is characterized by high spectral efficiency, high user experienced data rate, high peak data. URLLC is characterized by ultra-reliability, ultra-low latency, ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

SUMMARY

The disclosure is to provide a method and apparatus for transceiving (e.g., transmitting and receiving) a low-power signal in a wireless communication system.

According to an embodiment, a method of a terminal may be provided for operating in a wireless communication system. The method of the terminal may include receiving a payload of a low-power wake-up signal (LP-WUS), and monitoring a physical downlink control channel (PDCCH) based on the received payload of the LP-WUS. Here, the payload of the LP-WUS includes at least one of user identity information, cell identity information, cyclic redundancy check (CRC) information, role information of the LP -WUS, and operation state information of the LP-WUS.

According to another embodiment, a method of a base station may be provided for operating in a wireless communication system. The method of the base station may include configuring a payload of a low-power wake-up signal (LP-WUS), and transmitting the configured payload of the LP-WUS. Here, the payload of the LP-WUS includes at least one of user identity information, cell identity information, cyclic redundancy check (CRC) information, role information of the LP -WUS, and operation state information of the LP-WUS.

According to a further another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include: receiving a payload of a low-power wake-up signal (LP-WUS) and monitoring a physical downlink control channel (PDCCH) based on the received payload of the LP-WUS. Here, the payload of the LP-WUS includes at least one of user identity information, cell identity information, cyclic redundancy check (CRC) information, role information of the LP -WUS, and operation state information of the LP-WUS.

According to still another embodiment, a base station may be provided for operating in a wireless communication system. The base station may include at least one processor; and at least one memory configured to store instructions and operably electrically connectable to the at least one processor, wherein operations performed based on the instructions executed by the at least one processor include: configuring a payload of a low-power wake-up signal (LP-WUS) and transmitting the configured payload of the LP-WUS. Here, the payload of the LP-WUS includes at least one of user identity information, cell identity information, cyclic redundancy check (CRC) information, role information of the LP -WUS, and operation state information of the LP-WUS.

The payload of the LP-WUS may include i) k bits including an identity and ii) repetition bits of at least a part of the k bits, where k is a natural number greater than or equal to 1.

Alternatively, the payload of the LP-WUS may comprise k bits including an identity, and a length of the payload of the LP-WUS is greater than or equal to the k bits, where k is a natural number greater than or equal to 1.

The user identity information may be partitioned information related to a user identity. The partitioned information related to the user identity may be most significant bit (MSB) information or least significant bit (LSB) information of the user identity. Further, the user identity may be a user equipment identity (UE ID) or a UE group identity.

Meanwhile, the payload of the LP-WUS may be transmitted and received through a parameter value of an on-off keying (OOK) sequence. Alternatively, the payload of the LP-WUS may be transmitted and received through a parameter value of an overlaid orthogonal frequency division multiplexing (OFDM) sequence.

BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 is a diagram illustrating an exemplary operation of a terminal configured with a low-power wake-up receiver (LP-WUR).
FIG. 8 is a flowchart showing a method of operating a terminal according to an embodiment.
FIG. 9 is a flowchart showing a method of operating a base station according to an embodiment.
FIG. 10 is a block diagram showing apparatuses according to an embodiment of the disclosure.
FIG. 11 is a block diagram showing a terminal according to an embodiment of the disclosure.
FIG. 12 is a block diagram of a processor in accordance with an embodiment.
FIG. 13 is a detailed block diagram of a transceiver of a first apparatus shown in FIG. 10 or a transceiving unit of an apparatus shown in FIG. 11.

DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

[Table 1]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

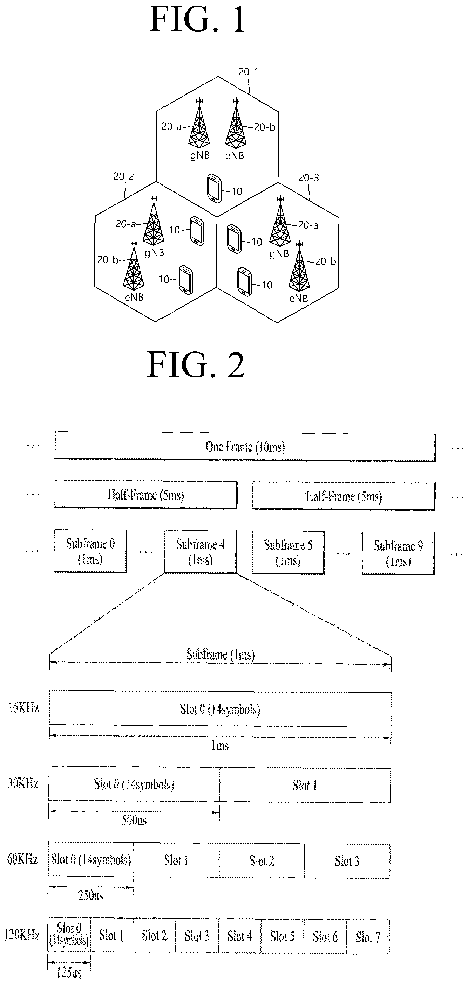

**FIG. 1 is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

FIG. 2 is a diagram illustrating a structure of a radio frame used in new radio (NR).

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

**<Support of Various Numerologies>**

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by $\mu$).

[Table 2]

| $\mu$ | $\Delta f = 2^{\mu} \cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot ($N^{slot}_{symb}$), the number of slots per frame ($N^{frame,\mu}_{slot}$), and the number of slots per subframe ($N^{subframe,\mu}_{slot}$) according to each numerology expressed by $\mu$ in the case of a normal CP.

[Table 3]

| $\mu$ | $\Delta f = 2^{\mu} \cdot 15$ [kHz] | $N^{slot}_{symb}$ | $N^{frame, \mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot ($N^{slot}_{symb}$), the number of slots per frame ($N^{frame,\mu}_{slot}$), and the number of slots per subframe ($N^{subframe,\mu}_{slot}$) of a numerology represented by $\mu$ in the case of an extended CP.

[Table 4]

| μ | SCS (15*2^u) | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

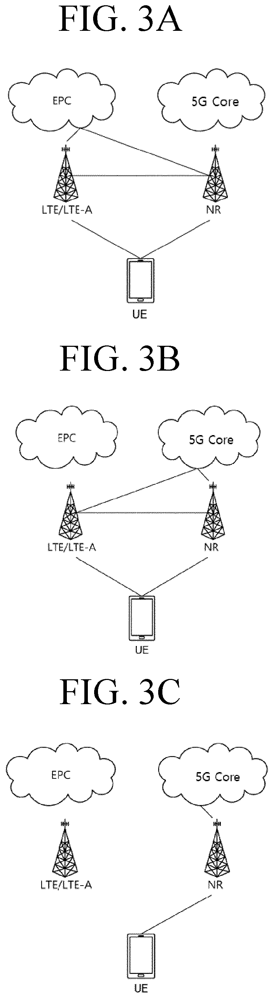

FIGS. 3A to 3C illustrate exemplary architectures for a wireless communication service.

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

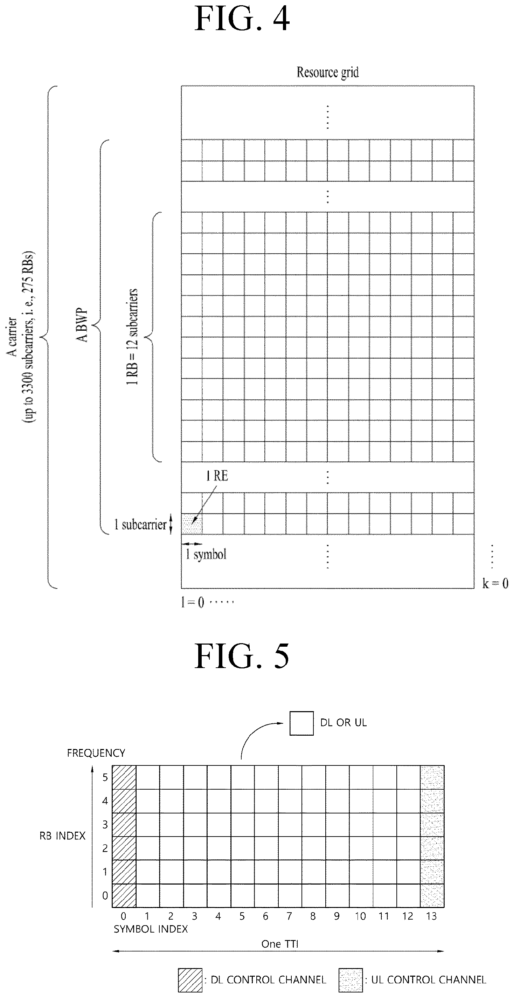

FIG. 4 illustrates a slot structure of an NR frame.

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

FIG. 5 shows an example of a subframe type in NR.

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

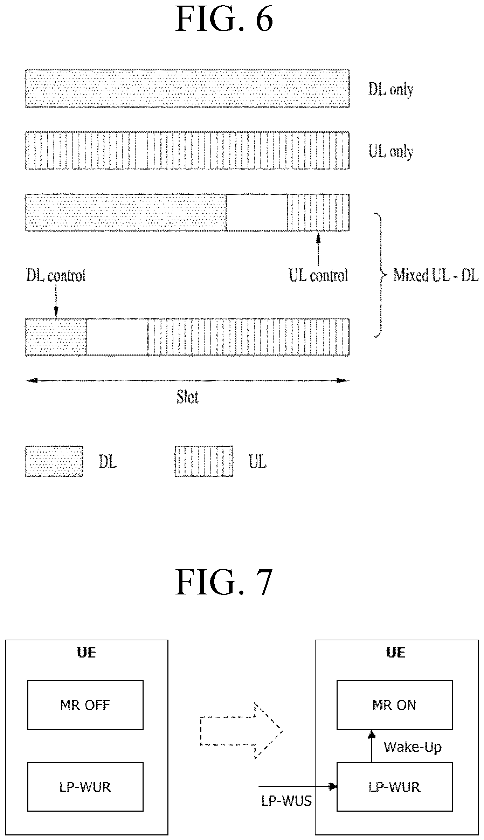

FIG. 6 illustrates a structure of a self-contained slot.

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.

1. DL only configuration
2. UL only configuration
3. Mixed UL-DL configuration

– DL region + Guard Period (GP) + UL control region

– DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

In typical 3GPP NR, various technologies have been employed to reduce the power consumption of a terminal, such as operating in idle/inactive states and introducing transmission schemes like Discontinuous Transmission (DTX) and Discontinuous Reception (DRX). Additionally, in the power-saving feature introduced in 3GPP Release 16, a mechanism was adopted to reduce blind decoding for PDCCH monitoring in the next cycle under DTX/DRX conditions. Specifically, a Downlink Control Information (DCI) message is transmitted in a prior period to indicate the necessity of transmission in the upcoming period. This mechanism is commonly referred to as a UE Wake-Up Signal (WUS), and it is transmitted using DCI Format 2-6 within a designated search space defined for transmitting the corresponding DCI. The DCI contains specific contents, and it is scrambled using a special Radio Network Temporary Identifier (RNTI) called the Power Saving-RNTI (PS-RNTI).

- block number 1, block number 2, ..., block number N

Block-related information is configured, including its location, through RRC signaling. Each block comprises one bit for wake-up indication and a predefined number of bits (ranging from 0 to 5) for Scell dormancy indication. By receiving this signal, the terminal can determine whether it needs to perform PDCCH monitoring for reception in the next DRX cycle. If the signal indicates that reception is not necessary, the terminal can skip transmission and reception for that cycle.

Meanwhile, a terminal in the idle state periodically checks through paging whether it needs to transition to the connected state. Paging is configured for each user group, and to prevent unnecessary paging within the same group, thereby reducing additional power consumption, the enhanced UE power-saving feature introduced in 3GPP Release 17 enables more targeted paging message transmission through a message called Paging Early Indication (PEI). This message is transmitted using DCI Format 2-7 and is transmitted via a specifically defined search space for this DCI transmission. The DCI contains specific contents and is scrambled using a special RNTI called PEI-RNTI.

- PEI (Paging Early Indication): The size is determined by an upper layer, and each UE is assigned a specific position. If the bit at the assigned position is set to 1, the UE reads the next paging occasion.

TRS (Tracking Reference Signal) Availability Indication: Provided when necessary.

Meanwhile, due to the requirements of technologies such as Ambient IoT and Reduced Capability (RedCap), the need for more extensive power savings in terminals has emerged. As a result, the standardization of a Low-Power Wake-Up Signal (LP-WUS) and a corresponding Low-Power Wake-Up Receiver (LP-WUR), which supports a receiver with lower standby power consumption at the hardware level, has been agreed upon. In particular, the work item (WI) of 3GPP Release 19 discusses the standardization methods for LP-WUS and LP-WUR, and objectives such as those shown in Table 5 have been established.

[Table 5]

| |
|---|
| To specify an LP-WUS design commonly applicable to both IDLE/INACTIVE and CONNECTED modes (RAN1, RAN4)<br><br>> Specify OOK (OOK-1 and/or OOK-4) based LP-WUS with overlaid OFDM sequence(s) over OOK symbol<br><br>>> The LP-WUS design shall ensure that for IDLE/INACTIVE operation, the same information is delivered irrespective of LP-WUR type. The OFDM sequence can carry information.<br><br>> At least duty-cycled monitoring of LP-WUS is supported. |
| For IDLE/INACTIVE modes<br><br>> Specify procedure and configuration of LP-WUS indicating paging monitoring triggered by LP-WUS, including at least configuration, sub-grouping and entry/exit condition for LP-WUS monitoring (RAN2, RAN1, RAN3, RAN4)<br><br>> Specify LP-SS with periodicity with Yms for LP-WUR, for synchronization and/or RRM for serving cell. (RAN1, RAN4)<br><br>>> LP-SS is based on OOK-1 and/or OOK-4 waveform with or without overlaid OFDM sequences. Further down selection between with and without overlaid OFDM sequences is to be done within WI.<br><br>>> Note: For LP-WUR that can receive existing PSS/SSS, existing PSS/SSS can be used for synchronization and RRM instead of LP-SS.<br><br>>> Y will be decided within WI. 320ms is the start point.<br><br>> Specify further RRM relaxation of UE MR for both serving and neighbor cell measurements, and UE serving cell RRM measurement offloaded from MR to LP-WUR, including the necessary conditions (RAN4, RAN2)) |
| For CONNECTED mode, specify procedures to allow UE MR PDCCH monitoring triggered by LP-WUS including activation and deactivation procedure of LP-WUS monitoring (RAN2, RAN1)<br><br>> Check in RAN#105 for potential TU adjustment in RAN2<br><br>> Note: In CONNECTED mode, UE MR ultra-deep sleep is not considered, and UE RRM/RLM/BFD/CSI measurements are performed by MR |
| Note: The target coverage of LP-WUS and LP-SS shall be the coverage of PUSCH for message3. |
| Note: The optimization of LP-WUS signal design for idle/inactive mode is prioritized over the optimization for connected mode. |
| Specify the necessary RAN4 core requirement(s) to support the feature (RAN4).<br><br>> Specify UE low-power wake-up receiver requirements, at least REFSENS, ACS and ASCS requirements with consideration of possible new methodology to assess the low-power wake-up receiver performance<br><br>>> Define guard RBs for ACS and ASCS cases<br><br>>> Study testability of above requirements<br><br>>> Consider impacts of different architecture and impairments, and set requirements that enable all types of reasonable implementation<br><br>> Study and if necessary specify or support by declaration, the corresponding BS requirements, e.g., dynamic range for LP-WUS/LP-SS.<br><br>>> Current NR BS requirements is baseline<br><br>>> Specify necessary RRM requirements |

**FIG. 7 is a diagram illustrating an exemplary operation of a terminal configured with a low-power wake-up receiver (LP-WUR).**

The Low-Power Wake-Up Receiver (LP-WUR) is defined as a receiver that can only receive wake-up signals and essential signals related to them, separate from the transceiver traditionally used for data transmission and reception. When a terminal enters deep sleep mode or low-power WUR mode, the transceiver (i.e., the Main Radio, MR) that was used for transmitting and receiving NR signals/channels is turned off (or stops PDCCH monitoring), and only the LP-WUR is turned on to receive the wake-up signal and associated essential signals through the LP-WUR. This setup is expected to drastically reduce the terminal's power consumption. At this point, the terminal that receives the wake-up signal through the LP-WUR may be instructed to switch to MR mode. Upon receiving this instruction, the terminal switches from LP-WUR to MR mode and can perform communication via the transceiver used for conventional NR data transmission and reception. FIG. 7 schematically illustrates the operation of a terminal configured with the LP-WUR as described above.

Meanwhile, NR signals are based on OFDM and comprise a set of resource elements (RE) with a symbol duration for each subcarrier. However, the LP-WUS must use a structure that allows for reception with relatively lower power compared to an OFDM receiver, meaning that a different type of signal from conventional OFDM may be used. These signals may vary widely, and the optimal signal may differ based on the terminal's capabilities and the required performance characteristics. Here, the optimal signal refers to the form that is best received as intended by the base station, and it is necessary to minimize the possibility of the following two types of malfunctions:

1. The phenomenon where the terminal wakes up even though the base station did not instruct it to wake up.
2. The phenomenon where the terminal does not wake up even though the base station instructed it to wake up.

To minimize these malfunctions, the transmitted LP-WUS should include as much information related to the recipient user ID (e.g., intended UE identity) as possible, and this may be delivered in the form of the LP-WUS payload. However, the specific method for structuring this payload has not yet been discussed.

The embodiments of the disclosure, devised to solve these issues, provide a method for structuring the payload for signal transmission and reception through a low-power receiver in a 3GPP NR system. For example, the ID (identity) information of the LP-WUS (Low-Power Wake-Up Signal) receiving terminal can be included in the payload. Specifically, the invention provides a method for how each bit of the LP-WUS payload is transmitted and how these combinations of bits can be associated with the user ID.

This disclosure provides (1) a method for configuring a payload message, (2) a method for partitioning the payload message, and (3) a method for mapping the partitioned payload message. For the sake of clarity, each method is described separately, but the contents described in one method may be combined with those in the other method for operation.

(1) A method for configuring a payload message

This method provides a way to configure the payload message of the LP-WUS. The payload message can contain information such as user identity (e.g., user equipment (UE) identity), cell identity, CRC (cyclic redundancy check), the role of the WUS, and/or operational state. In this embodiment, the method for configuring the payload message is provided for when the payload has an even number of bits and when it has an odd number of bits.

1-1) When the payload message length is an even 2k bits, it may operate in one of the following forms:

- An ID (identity) of 2k-1 bits and 1 parity bit, pre-indicated (e.g., preconfigured) to the UE during LP-WUS configuration
- An ID (identity) of k bits and its repeated bits, pre-indicated (e.g., preconfigured) to the UE during LP-WUS configuration
- An ID (identity) of k bits and its complementary repeated bits, pre-indicated (e.g., preconfigured) to the UE during LP-WUS configuration
- Part of the 2k-1 bits and 1 parity bit from the pre-configured individual UE's RNTI value
- Part of the k bits and their repeated bits from the pre-configured individual UE's RNTI value
- Part of the k bits and their complementary repeated bits from the pre-configured individual UE's RNTI value
- The 2k-1 bits and 1 parity bit connected to the value pre-indicated (e.g., preconfigured) to the UE during the LP-WUS configuration and part of the pre-configured individual UE's RNTI value
- The k bits and their repeated bits connected to the value pre-indicated (e.g., preconfigured) to the UE during the LP-WUS configuration and part of the pre-configured individual UE's RNTI value
- The k bits and their complementary repeated bits connected to the value pre-indicated (e.g., preconfigured) to the UE during the LP-WUS configuration and part of the pre-configured individual UE's RNTI value

The 2k-1 bits and 1 parity bit XORed with the value pre-indicated (e.g., preconfigured) to the UE during the LP-WUS configuration and part of the pre-configured individual UE's RNTI value

The k bits and their repeated bits XORed with the value pre-indicated (e.g., preconfigured) to the UE during the LP-WUS configuration and part of the pre-configured individual UE's RNTI value

The k bits and their complementary repeated bits XORed with the value pre-indicated (e.g., preconfigured) to the UE during the LP-WUS configuration and part of the pre-configured individual UE's RNTI value

1-2) When the payload message length is an odd 2k+1 bits, it may operate in one of the following forms:

- An ID (identity) of 2k bits and 1 parity bit, pre-indicated (e.g., preconfigured) to the UE during LP-WUS configuration
- An ID (identity) of k bits and its repeated bits, and 1 parity bit, pre-indicated (e.g., preconfigured) to the UE during LP-WUS configuration
- An ID (identity) of k bits and its complementary repeated bits, and 1 parity bit, pre-indicated (e.g., preconfigured) to the UE during LP-WUS configuration
- Part of the 2k bits and 1 parity bit from the pre-configured individual UE's RNTI value
- Part of the k bits and their repeated bits, and 1 parity bit from the pre-configured individual UE's RNTI value
- Part of the k bits and their complementary repeated bits, and 1 parity bit from the pre-configured individual UE's RNTI value
- The 2k bits and 1 parity bit connected to the value pre-indicated (e.g., preconfigured) to the UE during the LP-WUS configuration and part of the pre-configured individual UE's RNTI value
- The k bits and their repeated bits, and 1 parity bit connected to the value pre-indicated (e.g., preconfigured) to the UE during the LP-WUS configuration and part of the pre-configured individual UE's RNTI value
- The k bits and their complementary repeated bits, and 1 parity bit connected to the value pre-indicated (e.g., preconfigured) to the UE during the LP-WUS configuration and part of the pre-configured individual UE's RNTI value
- The 2k bits and 1 parity bit XORed with the value pre-indicated (e.g., preconfigured) to the UE during the LP-WUS configuration and part of the pre-configured individual UE's RNTI value
- The k bits and their repeated bits, and 1 parity bit XORed with the value pre-indicated (e.g., preconfigured) to the UE during the LP-WUS configuration and part of the pre-configured individual UE's RNTI value
- The k bits and their complementary repeated bits, and 1 parity bit XORed with the value pre-indicated (e.g., preconfigured) to the UE during the LP-WUS configuration and part of the pre-configured individual UE's RNTI value.

1-3) Insertion of Role-Related Bits and Operation State-Related Bits of LP-WUS

The payload may include a 1-bit LP-WUS (Low-Power Wake-Up Signal) / LP-SS (Low-Power Synchronization Signal) identifier. Alternatively, the 1 bit may indicate whether the WUS is a message for paging UEs in idle/inactive states or a message for indicating PDCCH monitoring for UEs in a connected state. Depending on whether the remaining length of the payload is even or odd, the configuration of the remaining message may follow either method 1-1) or method 1-2).

(2) A method for partitioning the payload message

This method provides a way to partition the LP-WUS payload message. A specific payload may be partitioned into groups that are mapped to different resource types, and bits from multiple distinct groups may be mapped to the same resource type. A single LP-WUS payload may be partitioned into at least two of the following groups.

- MSB (Most Significant Bit) of cell ID related information
- LSB (Least Significant Bit) of cell ID related information
- Whether it is an SS (Synchronization Signal) / WUS (Wake-Up Signal)
- Whether it is a paging / PDCCH indication
- MSB of UE ID related information
- LSB of UE ID related information
- MSB of UE group ID related information
- LSB of UE group ID related information
- MSB of combined information related to cell ID and UE ID / UE group ID
- LSB of combined information related to cell ID and UE ID / UE group ID
- CRC (Cyclic Redundancy Check)
- Parity bit

(3) A method for mapping the partitioned payload message

This method provides a way to map the LP-WUS payload message. The LP-WUS may be transmitted by partitioning (e.g., mapping) the payload bits in at least one of the following forms.

- The form of LP-WUS (OOK-1 or OOK-4)
- The frequency location where LP-WUS is transmitted
- The time location where LP-WUS is transmitted, determined relative to the frame number or the LP-SS location
- The type of LP-WUS OOK sequence, determined by the sequence value and cyclic shift value, or the combination method of multiple sequences

- The type of LP-WUS overlaid OFDM sequence, determined by the sequence value and cyclic shift value, or the combination method of multiple sequences

Meanwhile, the present disclosure provides groups transmitted through an overlaid OFDM sequence. This may include at least one of the following messages.

- LSB of cell ID related information
- LSB of UE ID related information
- LSB of UE group ID related information
- LSB of combined information related to cell ID and UE ID / UE group ID
- CRC
- Parity bit

The LSB mentioned earlier does not always refer to the position of the bit but may refer to a portion of the bits of the configuration information. That is, the method includes cases where the group transmitted through the overlaid OFDM sequence contains at least one of the following messages.

- MSB of cell ID related information
- MSB of UE ID related information
- MSB of UE group ID related information
- MSB of combined information related to cell ID and UE ID / UE group ID
- CRC
- Parity bit

Alternatively, when both cell ID-related and UE ID-related information are transmitted, the information transmitted through the overlaid OFDM sequence may be only one of them. Through this method, even if a specific terminal fails to recognize/receive (e.g., detect/decode) the overlaid OFDM sequence of LP-WUR, it may still perform normal operation, accepting the slightly higher probability of false alarms.

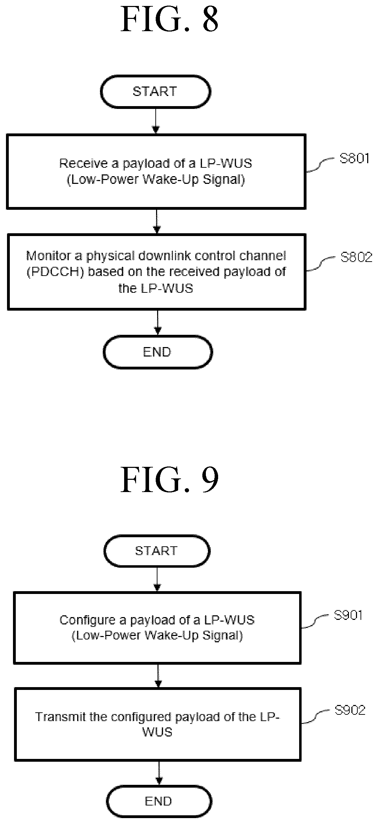

FIG. 8 shows a flowchart showing a method of operating a terminal according to an embodiment.

Referring to FIG. 8, a terminal receives a payload of a low-power wake-up signal (LP-WUS) (S801). Then, the terminal monitors a physical downlink control channel (PDCCH) based on the received payload of the LP-WUS (S802). Here, the payload of the LP-WUS may include at least one of the following, user identity information (e.g., user equipment (UE) identity information), cell identity information, cyclic redundancy check (CRC) information, role information of the LP -WUS, and operation state information of the LP-WUS.

The payload of the LP-WUS may include i) k bits including an identity (e.g., identifier) and ii) repetition bits of at least a part of the k bits, where k is a natural number greater than or equal to 1.

Alternatively, the payload of the LP-WUS may comprise k bits including an identity (e.g., identifier), and a length of the payload of the LP-WUS is greater than or equal to the k bits, where k is a natural number greater than or equal to 1.

The user identity information (e.g., UE identity information) may be partitioned information related to a user identity (e.g., UE identity). The partitioned information related to the user identity (e.g., UE identity) may be most significant bit (MSB) information or least significant bit (LSB) information of the user identity. Further, the user identity (e.g., UE identity) may be a user equipment identity (UE ID) or a UE group identity.

Meanwhile, the payload of the LP-WUS may be received through a parameter value of an on-off keying (OOK) sequence. Alternatively, the payload of the LP-WUS may be received through a parameter value of an overlaid orthogonal frequency division multiplexing (OFDM) sequence.

FIG. 9 shows a flowchart showing a method of operating a base station according to an embodiment.

Referring to FIG. 9, a base station configures a payload of a low-power wake-up signal (LP-WUS) (S901). Then, the base station transmits the configured payload of the LP-WUS (S902). Here, the payload of the LP-WUS may include at least one of the following, user identity information (e.g., UE identity information), cell identity information, cyclic redundancy check (CRC) information, role information of the LP -WUS, and operation state information of the LP-WUS.

The payload of the LP-WUS may include i) k bits including an identity (e.g., identifier) and ii) repetition bits of at least a part of the k bits, where k is a natural number greater than or equal to 1.

Alternatively, the payload of the LP-WUS may include k bits including an identity, and a length of the payload of the LP-WUS is greater than or equal to the k bits, where k is a natural number greater than or equal to 1.

The user identity information (e.g., UE identity information) may be partitioned information related to a user identity (e.g., UE identity). The partitioned information related to the user identity may be most significant bit (MSB) information or least significant bit (LSB) information of the user identity. Further, the user identity may be a user equipment identity (UE ID) or a UE group identity.

Meanwhile, the payload of the LP-WUS may be transmitted through a parameter value of an on-off keying (OOK) sequence. Alternatively, the payload of the LP-WUS may be transmitted through a parameter value of an overlaid orthogonal frequency division multiplexing (OFDM) sequence.

The embodiments described up to now may be implemented through various means. For example, the embodiments may be implemented by hardware, firmware, software, or a combination thereof. Details will be described with reference to the accompanying drawings.

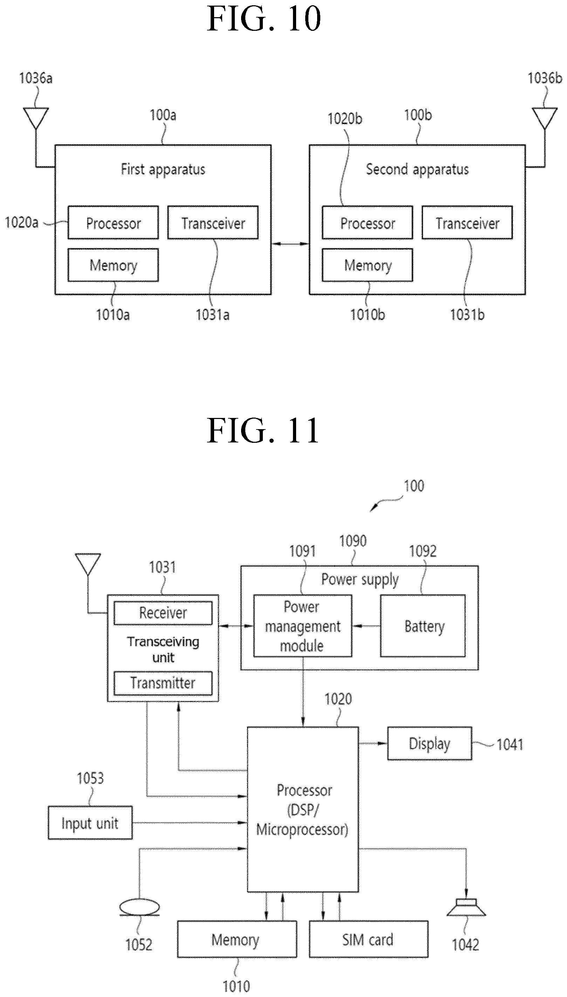

**FIG. 10 is a block diagram showing apparatuses according to an embodiment of the disclosure.**

Referring to FIG. 10, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 11 is a block diagram showing a terminal according to an embodiment of the disclosure.**

In particular, FIG. 11 illustrates the previously described apparatus of FIG. 10 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

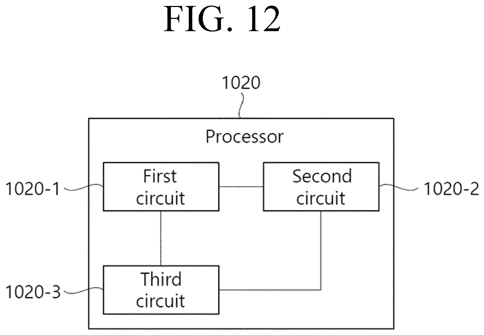

**FIG. 12 is a block diagram of a processor in accordance with an embodiment.**

Referring to FIG. 12, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

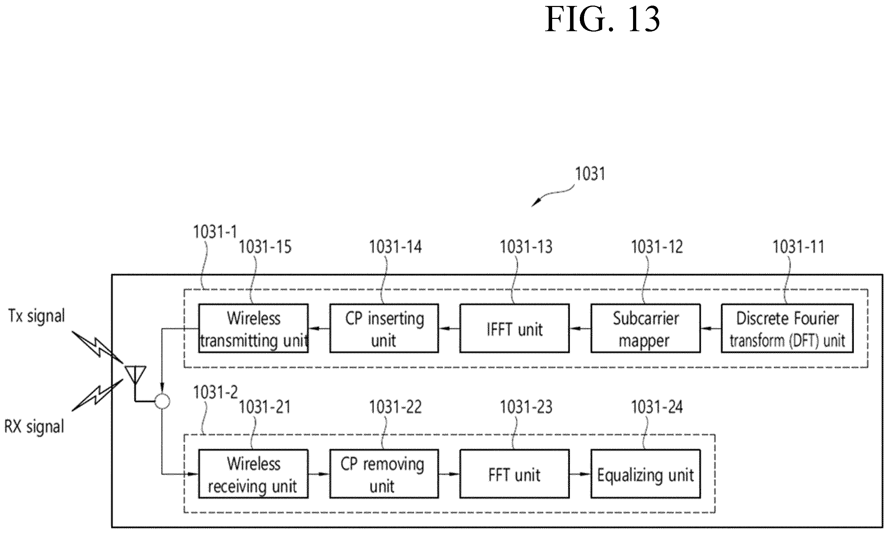

**FIG. 13 is a detailed block diagram of a transceiver of a first apparatus shown in FIG. 10 or a transceiving unit of an apparatus shown in FIG. 11.**

Referring to FIG. 13, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, in the transceiving (e.g., transmission and reception) environment of the LP-WUS (low-power wake-up signal), which is transmitted in a form different from the general NR in a wireless communication system, it is possible to suppress resource and power waste due to reception-induced malfunctions and ensure efficient operation.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method of a terminal to operate in a wireless communication system, the method comprising:

   receiving a payload of a low-power wake-up signal (LP-WUS); and
   monitoring a physical downlink control channel (PDCCH) based on the received payload of the LP-WUS,
   wherein the payload of the LP-WUS includes at least one of user identity information, cell identity information, cyclic redundancy check (CRC) information, role information of the LP - WUS, and operation state information of the LP-WUS.

2. The method of claim 1, wherein the payload of the LP-WUS comprises i) k bits including an identity and ii) repetition bits of at least a part of the k bits, where k is a natural number greater than or equal to 1.

3. The method of claim 1, wherein the payload of the LP-WUS comprises k bits including an identity, and a length of the payload of the LP-WUS is greater than or equal to the k bits, where k is a natural number greater than or equal to 1.

4. The method of claim 1, wherein the user identity information is partitioned information related to a user identity.

5. The method of claim 4, wherein the partitioned information related to the user identity is most significant bit (MSB) information or least significant bit (LSB) information of the user identity.

6. The method of claim 5, wherein the user identity is a user equipment identity (UE ID) or a UE group identity.

7. The method of claim 1, wherein the payload of the LP-WUS is received through a parameter value of an on-off keying (OOK) sequence.

8. The method of claim 1, wherein the payload of the LP-WUS is received through a parameter value of an overlaid orthogonal frequency division multiplexing (OFDM) sequence.

9. A method of a base station to operate in a wireless communication system, the method comprising:

  configuring a payload of a low-power wake-up signal (LP-WUS); and
  transmitting the configured payload of the LP-WUS,
  wherein the payload of the LP-WUS includes at least one of user identity information, cell identity information, cyclic redundancy check (CRC) information, role information of the LP - WUS, and operation state information of the LP-WUS.

10. The method of claim 9, wherein the payload of the LP-WUS comprises i) k bits including an identity and ii) repetition bits of at least a part of the k bits, where k is a natural number greater than or equal to 1.

11. The method of claim 9, wherein the payload of the LP-WUS comprises k bits including an identity, and a length of the payload of the LP-WUS is greater than or equal to the k bits, where k is a natural number greater than or equal to 1.

12. The method of claim 9, wherein the user identity information is partitioned information related to a user identity.

13. The method of claim 12, wherein the partitioned information related to the user identity is most significant bit (MSB) information or least significant bit (LSB) information of the user identity.

14. The method of claim 13, wherein the user identity is a user equipment identity (UE ID) or a UE group identity.

15. A terminal in a wireless communication system, comprising:

  at least one processor; and
  at least one memory configured to store instructions and operably electrically connectable to the at least one processor,
  wherein operations performed based on the instructions executed by the at least one processor comprise:

    receiving a payload of a low-power wake-up signal (LP-WUS); and
    monitoring a physical downlink control channel (PDCCH) based on the received payload of the LP-WUS,
    wherein the payload of the LP-WUS includes at least one of user identity information, cell identity information, cyclic redundancy check (CRC) information, role information of the LP - WUS, and operation state information of the LP-WUS.

# FIG. 1

# FIG. 2

| | One Frame (10ms) | |
|---|---|---|

| Half-Frame (5ms) | Half-Frame (5ms) |
|---|---|

| Subframe 0 (1ms) | ... | Subframe 4 (1ms) | Subframe 5 (1ms) | ... | Subframe 9 (1ms) |
|---|---|---|---|---|---|

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 3A

# FIG. 3B

# FIG. 3C

# FIG. 4

Resource grid

A carrier
(up to 3300 subcarriers, i. e., 275 RBs)

A BWP

1 RB = 12 subcarriers

1 RE

1 subcarrier

1 symbol

k = 0

l = 0 ·····

# FIG. 5

DL OR UL

FREQUENCY

RB INDEX

5
4
3
2
1
0

0  1  2  3  4  5  6  7  8  9  10  11  12  13
SYMBOL INDEX

One TTI

⬚ : DL CONTROL CHANNEL      ⬚ : UL CONTROL CHANNEL

# FIG. 6

DL only

UL only

DL control    UL control    } Mixed UL - DL

Slot

DL    UL

# FIG. 7

| UE | UE |
| MR OFF | MR ON |
| LP-WUR | LP-WUR |

Wake-Up

LP-WUS

# FIG. 8

START

Receive a payload of a LP-WUS
(Low-Power Wake-Up Signal) ⌒ S801

Monitor a physical downlink control channel
(PDCCH) based on the received payload of
the LP-WUS ⌒ S802

END

# FIG. 9

START

Configure a payload of a LP-WUS
(Low-Power Wake-Up Signal) ⌒ S901

Transmit the configured payload of the LP-
WUS ⌒ S902

END

# FIG. 10

1036a

1020a

100a

First apparatus

Processor | Transceiver

Memory

1010a | 1031a

1020b | 100b

Second apparatus

Processor | Transceiver

Memory

1010b | 1031b

1036b

# FIG. 11

100

1091 | 1090 | 1092

Power supply

1031

Receiver

Transceiving unit

Transmitter

Power management module

Battery

1020

Processor (DSP/ Microprocessor)

Display | 1041

1053

Input unit

1052 | Memory | SIM card | 1042

1010

# FIG. 12

1020

Processor

First circuit

1020-1

Second circuit

1020-2

Third circuit

1020-3

# FIG. 13

Europäisches
Patentamt

European
Patent Office

Office européen
des brevets

## EUROPEAN SEARCH REPORT

**Application Number**

EP 25 16 9222

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUEMING PAN ET AL: "Discussion on LP-WUS and LP-SS design", 3GPP DRAFT; R1-2400253; TYPE DISCUSSION; NR_LPWUS-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052568037, Retrieved from the Internet: URL:https://www.3gpp.org/ftp/TSG_RAN/WG1_R L1/TSGR1_116/Docs/R1-2400253.zip R1-2400253.docx [retrieved on 2024-02-19] | 1,3-9, 11-15 | INV. H04W52/02 ADD. H04L1/00 H04L5/00 H04L27/00 |
| Y | * page 2 * * page 8, 3.1. * * page 9 * * page 10 - page 11 * | 2,10 | |

-----

-/--

**TECHNICAL FIELDS SEARCHED (IPC)**

H04W
H04L

The present search report has been drawn up for all claims

| Place of search | Date of completion of the search | Examiner |
|---|---|---|
| The Hague | 10 July 2025 | Tavares, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

**Application Number**

EP 25 16 9222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "3rd Generation Partnership Project; Technical Specification Group Radio Access Network; Study on low-power wake-up signal and receiver for NR (Release 18)", 3GPP STANDARD; TECHNICAL REPORT; 3GPP TR 38.869, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V18.0.0 18 January 2024 (2024-01-18), pages 1-261, XP052576838, Retrieved from the Internet: URL:https://ftp.3gpp.org/Specs/archive/38_series/38.869/38869-i00.zip 38869-i00.docx [retrieved on 2024-01-18] * page 78 - page 79 * ----- | 1,9,15 | |
| X | SUKCHEL YANG ET AL: "Discussion on LP-WUS operation in CONNECTED modes", 3GPP DRAFT; R1-2403128; TYPE DISCUSSION; NR_LPWUS-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Changsha, Hunan Province, CN; 20240415 - 20240419 5 April 2024 (2024-04-05), XP052587109, Retrieved from the Internet: URL:https://www.3gpp.org/ftp/TSG_RAN/WG1_RL1/TSGR1_116b/Docs/R1-2403128.zip R1-2403128 Discussion on LP-WUS operation in CONNECTED modes.docx [retrieved on 2024-04-05] * page 2 * * page 4 * ----- | 1,9,15 | **TECHNICAL FIELDS SEARCHED (IPC)** |

-/--

The present search report has been drawn up for all claims

| Place of search | Date of completion of the search | Examiner |
|---|---|---|
| The Hague | 10 July 2025 | Tavares, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 16 9222

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/240182 A1 (BALDEMAIR ROBERT [SE] ET AL) 28 July 2022 (2022-07-28)<br>* paragraph [0029] *<br>* paragraph [0036] *<br>- - - - - | 2,10 | |
| | | | **TECHNICAL FIELDS SEARCHED (IPC)** |

The present search report has been drawn up for all claims

| Place of search | Date of completion of the search | Examiner |
|---|---|---|
| The Hague | 10 July 2025 | Tavares, José |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 9222

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | Publication date | Patent family member(s) | | Publication date |
|---|---|---|---|---|
| US 2022240182 A1 | 28-07-2022 | EP | 3874830 A1 | 08-09-2021 |
| | | US | 2022240182 A1 | 28-07-2022 |
| | | WO | 2020089450 A1 | 07-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240048295
- KR 1020250037734